(19) Europäisches Patentamt / European Patent Office / Office européen des brevets

(11) **EP 2 562 518 B1**

(12) **FASCICULE DE BREVET EUROPEEN**

(45) Date de publication et mention
de la délivrance du brevet:
**17.02.2021   Bulletin 2021/07**

(51) Int Cl.:
**G01F 9/02** *(2006.01)*        **B60R 16/023** *(2006.01)*

(21) Numéro de dépôt: **11306059.4**

(22) Date de dépôt: **22.08.2011**

(54) **Dispositif et procédé d'évaluation de la conduite d'un véhicule**

Vorrichtung und Verfahren zur Bewertung der Fahrweise eines Fahrzeuges

Device and method for evaluating the driving of a vehicle.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**27.02.2013   Bulletin 2013/09**

(73) Titulaire: **Dufournier, Arnaud
63000 Clermont Ferrand (FR)**

(72) Inventeur: **Dufournier, Arnaud
63000 Clermont Ferrand (FR)**

(74) Mandataire: **Cabinet Laurent & Charras
3 place de l'Hotel de Ville
CS 70203
42005 Saint-Etienne Cedex 1 (FR)**

(56) Documents cités:
**EP-A1- 2 011 696        WO-A1-03/086786
GB-B- 2 432 437        US-A- 5 913 917
US-A1- 2003 114 977        US-A1- 2005 288 850
US-A1- 2010 106 350**

EP 2 562 518 B1

**Description**

DOMAINE TECHNIQUE DE L'INVENTION

L'invention concerne un dispositif d'évaluation de la conduite d'un véhicule permettant de fournir une cote d'énergie de conduite du véhicule. L'invention concerne par ailleurs un procédé d'évaluation de la conduite d'un véhicule permettant également de fournir une cote d'énergie de conduite du véhicule.

ETAT DE LA TECHNIQUE ANTERIEURE

On connaît des systèmes de mesure de la consommation de carburant pour les véhicules. Certains systèmes proposent des fonctions visant à favoriser l'économie de carburant. Les systèmes connus sont toutefois essentiellement basés sur une mesure de la consommation, tels que ceux décrits dans GB2432437 et US2005/28885.

Cette mesure comprend la performance du moteur, la performance de la chaîne de transmission (boîte de vitesse et éventuellement automatisation des passages de rapport, différentiels, roulements, pneus), l'effet de la charge emportée et du poids du véhicule, l'effet de l'aérodynamique, l'effet des conditions extérieures telles que les conditions météorologiques (vent, pluie, etc), l'effet du tracé (dénivelé et succession de montées et descentes, la sinuosité, l'uniformité verticale du sol, l'effet des conditions de circulation (trafic fluide, congestion, accident, travaux, etc), l'effet de l'environnement du roulage (interurbain, urbain, hyper centre, autoroute, etc), la présence de feux de signalisation, de ronds-points ou de stops imposant un arrêt et donc une surconsommation à la relance et également le type de conduite du conducteur.

Par exemple, le document US 4 845 630 décrit un dispositif et un procédé permettant de calculer un taux de consommation corrigé. En plus d'un débitmètre classique, le dispositif comporte une série de capteurs, dont un capteur de distance, dans le but d'évaluer la variation d'énergie cinétique du véhicule. Un microprocesseur permet de corriger la consommation mesurée en fonction de cette énergie.

WO 83/01686 décrit un système permettant de corriger la mesure de consommation instantanée par unité de longueur en fonction de différentes formes d'énergie accumulées par le véhicule. Les signaux des capteurs utilisés et de la consommation corrigée sont présentés au conducteur à l'aide d'un afficheur.

FR 2 923 290 décrit un afficheur de véhicule automobile comprenant un indicateur de niveau d'énergie dont une dimension est représentative de l'énergie stockée dans une source d'énergie électrique du véhicule, un indicateur de sens de transfert apte à signaler le sens de transfert de l'énergie, à savoir en provenance de la source d'énergie électrique ou à destination de la source d'énergie électrique. Il comprend par ailleurs un indicateur d'énergie cinétique du véhicule dont une dimension est représentative au moins de la portion de l'énergie cinétique du véhicule issue de la source d'énergie électrique. L'énergie cinétique considérée est l'énergie en provenance de la source électrique et servant à la propulsion du véhicule.

Aucun de ces dispositifs ne propose de solution pour extraire un critère ou une cote ou tout autre mode d'évaluation, valeur ou indice qui soit techniquement objectif et lié uniquement ou majoritairement à la conduite du conducteur.

Dans les dispositifs existants, les effets du parcours et des conditions de roulage sont généralement prépondérants et ne permettent pas de disposer d'un critère focalisé principalement sur la qualité de conduite.

Par ailleurs, les dispositifs connus ne permettent pas d'équiper à postériori facilement et à peu de frais des véhicules existants.

Pour pallier ces différents inconvénients, l'invention prévoit différents moyens techniques.

**EXPOSE DE L'INVENTION**

Tout d'abord, un premier objet de l'invention consiste à prévoir un dispositif et un procédé permettant d'évaluer la conduite d'un véhicule, indépendamment des paramètres inhérents au véhicule lui-même et/ou au trajet effectué et son environnement.

Un autre objet de l'invention consiste à prévoir un dispositif et un procédé permettant de gérer une flotte de véhicule de façon économique et optimale,

Un autre objet de l'invention consiste à prévoir un dispositif permettant d'évaluer la conduite de véhicules préalablement existants.

Encore un autre objet de l'invention consiste à prévoir un dispositif et un procédé permettant d'indiquer au conducteur l'influence de son type de conduite sur la consommation de carburant.

Pour ce faire, l'invention prévoit un procédé permettant de fournir une cote d'énergie de conduite selon l'objet de la revendication 5.

La cote peut être sous la forme d'une valeur instantanée ou encore moyennée pour un trajet ou portion de trajet donné.

Ce procédé permet d'une part de s'affranchir des effets du véhicule et des conditions extérieures. D'autre part, la comparaison avec une référence simulant une conduite parfaite au sens de l'éco-conduite permet de s'affranchir des effets du tracé, et des conditions de circulation.

Ces deux fonctions sont distinctes et procurent des gains différents et complémentaires, permettant de s'affranchir des nombreux autres paramètres qui viennent brouiller le résultat des procédés et dispositifs connus, notamment ceux basés sur la consommation et sans comparaison avec une référence.

Le procédé permet de s'affranchir de paramètres sur lesquels le conducteur n'a pas de maitrise directe tels que les paramètres associés au véhicule dans son ensemble: aérodynamique, moteur (performance et réglages), transmission (y compris la boîte de vitesse et son paramétrage si celle-ci est automatisée), les pneumatiques et le niveau de résistance au roulement, ainsi que les conditions extérieures telles que les conditions météo (la température extérieure, le vent, la pluie, la neige, etc), et les conditions de chargement.

La comparaison avec un paramètre de référence permet de neutraliser l'effet du parcours en effectuant une comparaison à iso contexte. Ainsi, l'impact des virages, des montées et descentes, des obstacles, des feux, ronds-points et stops, des conditions de circulation (congestions, accidents, travaux, etc) est neutralisé.

Le procédé permet en outre de fournir une indication au conducteur sur la qualité de sa conduite, mais aussi de délivrer un suivi de la qualité de conduite dans le temps. Cette information peut en particulier être mise à profit par un gestionnaire de flotte ou un formateur.

Selon un mode de réalisation avantageux, le paramètre effectif et le paramètre de référence sont fonctions d'au moins un paramètre choisi dans une liste comprenant la vitesse, l'accélération longitudinale, l'accélération transversale, l'énergie, le travail (f=ma et travail = f X d), la puissance (w/s), la pente et le rayon de courbure de la route et la position.

Le paramètre physique est avantageusement la position du véhicule en fonction du temps. La position est de préférence fournie par un système de géolocalisation (par exemple de type GPS). La présence d'un tel système permet de monter le dispositif sur tout véhicule sans interfaçage avec un bus ou tout autre mode de connexion au système de gestion des données du véhicule.

Selon un mode de réalisation avantageux, le paramètre physique est la vitesse instantanée. Celle-ci peut être mesurée par un capteur de vitesse de type connu.

Selon un autre mode de réalisation, le paramètre physique est l'accélération instantanée. Celle-ci peut être mesurée par un capteur d'accélération de type connu ou calculée à partir des vitesses instantanées.

La cote d'énergie de conduite du véhicule est avantageusement fonction de l'écart de niveau énergétique par rapport à un niveau énergétique de référence. Cet écart provient essentiellement du type de conduite du conducteur qui a un impact direct sur le niveau énergétique effectif.

L'utilisation de paramètres de référence peut être assimilée à l'usage d'un simulateur. Le simulateur est un modèle de conducteur qui utilise le tracé identifié en appliquant un style de conduite dit « apaisé » ou "rationnel", c'est à dire optimisé en termes d'éco-conduite. Par exemple, le simulateur comporte des limites d'accélération maximale définies par plages de vitesse, des limites de décélération définies également par plages de vitesse, mais également des limites de vitesse en courbe basées sur l'accélération transversale et éventuellement la vitesse de lacet induite.

Le niveau énergétique de référence est avantageusement fonction d'une part de la consommation énergétique (que l'on souhaite optimiser) et d'autre part du temps de parcours (que l'on souhaite établir à une valeur raisonnable, pour éviter de considérer un temps de parcours trop long par rapport aux économies qui en découlent).

De manière avantageuse, la cote fournie exprime le niveau d'énergie relié uniquement à la conduite du véhicule. Par « relié uniquement à la conduite du véhicule », on entend en faisant abstraction des énergies dépensées pour des facteurs reliés à la construction du véhicules tels que le frottement, le rendement, etc, aux caractéristiques physiques du trajet tels que les virages, l'inclinaison la pente, le type de revêtement, etc, et aux conditions environnementales dans lesquelles le trajet est effectué, telles que la température, les précipitations, le vent, l'humidité, la densité de la circulation, etc.

L'invention prévoit également un dispositif permettant de fournir une cote d'énergie de conduite selon l'objet de la revendication 1.

La cote peut être sous la forme d'une valeur instantanée ou encore moyennée ou intégrée pour un trajet ou portion de trajet donné.

De manière avantageuse, le dispositif d'évaluation de la conduite d'un véhicule comprend par ailleurs un dispositif de géo-localisation.

L'utilisation d'un dispositif de géo-localisation permet d'éviter l'utilisation de plusieurs capteurs servant à obtenir chacun un paramètre différent. Les coûts sont fortement réduits et les possibilités d'installation fortement assouplies. En outre, les données de géo-localisation permettent de calculer la vitesse, l'accélération, etc. mais aussi d'utiliser des données cartographiques décrivant le contexte de roulage.

Dans une variante avantageuse, le dispositif d'évaluation de la conduite d'un véhicule comprend par ailleurs un centre de calcul de la vitesse et de l'accélération, relié ou intégré au dispositif de géo-localisation, et permettant de déterminer la vitesse et/ou l'accélération sur la base des données de position du véhicule fournies par le dispositif de géo-localisation.

## DESCRIPTION DES FIGURES

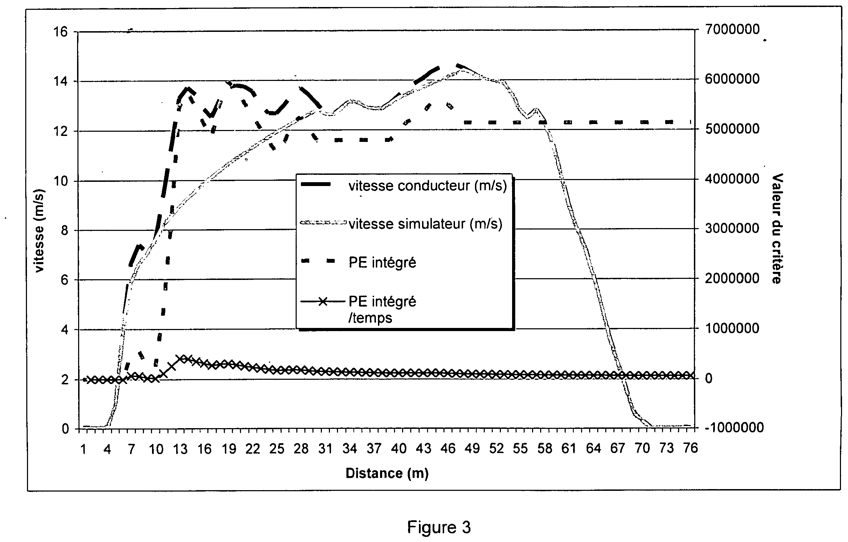

Tous les détails de réalisation sont donnés dans la description qui suit, complétée par les figures 1 à 4, présentées uniquement à des fins d'exemples non limitatifs, et dans lesquelles:

- la figure 1 représente de façon schématique les étapes clés du procédé d'évaluation de conduite selon l'invention;

- la figure 2 est un exemple de dispositif d'évaluation de la conduite d'un véhicule selon l'invention ;

- les figures 3 et 4 présentent des exemples de résultats obtenus grâce au procédé et au dispositif présentés.

## DESCRIPTION DETAILLEE DE L'INVENTION

Les critères d'éco-conduite sont basés sur la quantité d'énergie dépensée pour se déplacer d'un point à un autre. Les critères utilisés sont basés sur l'énergie mise en œuvre en terme de dynamique véhicule (énergie cinétique) et non l'énergie consommée par le moteur ou tout autre système du véhicule tel que notamment la boite de vitesse ou la chaine de transmission. Ces critères sont donc focalisés sur la qualité de conduite et sont indépendants du moteur et de tout autre élément de la chaine de transmission ou de l'aérodynamique du véhicule.

L'éco-conduite correspond à une attitude de conduite permettant de combiner une conduite économique et écologique. Écologique par la réduction de la consommation, par la réduction des gaz polluants émis majoritairement liés à la consommation, mais aussi par la réduction des déchets (plaquette de frein par exemple).□Economique par la réduction de consommation, mais aussi par la réduction de l'usure des pièces d'usure (pneus ou plaquettes de frein par exemple) et de la fatigue générale du véhicule (trains roulants par exemple).□□□

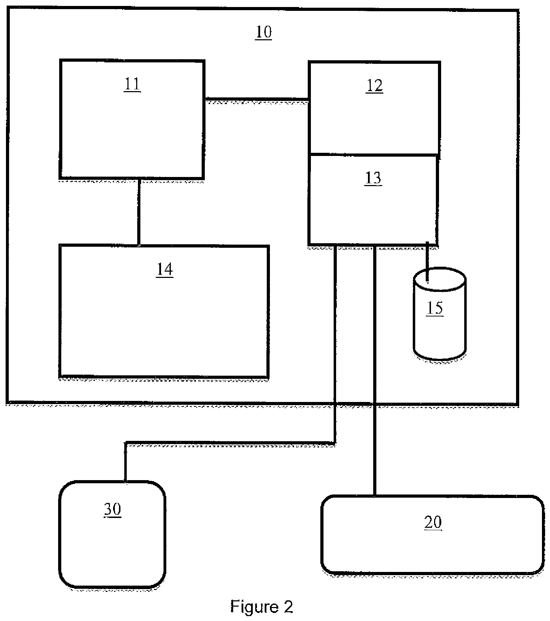

La figure 2 illustre un exemple d'un dispositif 10 d'évaluation de la conduite selon l'invention. Un moyen d'obtention 11 d'au moins un paramètre physique est prévu pour permettre de recevoir ou obtenir un ou des paramètres tels que la vitesse, l'accélération, la position en fonction du temps, etc. Ce moyen d'obtention peut soit procéder par obtention directe des paramètres, ou être relié à un ou plusieurs capteurs ou éléments susceptible de fournir ces données. Dans le premier cas, il peut comporter un ou plusieurs capteurs tels que des accéléromètres. Dans le second cas, il peut être relié à des équipements ou capteurs externes ou à un dispositif de géolocalisation externe ou interne tel que décrit ci-après.

Un centre de calcul et de comparaison 12 permet, à partir du paramètre physique, de calculer un paramètre effectif, dépendant de l'accélération instantanée, et de comparer le paramètre effectif à un paramètre de référence. Ce centre de calcul et de comparaison comporte les moyens matériels et/ou les instructions de calcul appropriées. Le centre de calcul et de comparaison 12 est relié au moyen d'obtention 11 pour assurer la transmission des données vers le centre 12.

Un centre d'évaluation 13 de la conduite (ou de l'énergie de conduite), permet de fournir une cote d'énergie de conduite (ou cote de conduite) du véhicule. Pour ce faire, le centre d'évaluation 13 procède en mesurant l'écart entre le paramètre effectif et un ou plusieurs paramètres de référence. Le centre d'évaluation de conduite 13 comporte les moyens matériels et/ou les instructions de calcul appropriées. Il est avantageusement relié au centre de calcul et de comparaison 12 pour assurer la transmission des données, Une base de données 15 de paramètres de référence est également prévue. Cette base peut être intégrée au dispositif, telle que montré à la figure 2, ou être située à distance, et accessible par le centre d'évaluation 13.

La cote obtenue peut être sous la forme d'une valeur instantanée ou encore moyennée ou intégrée pour un trajet ou portion de trajet donné.

Un dispositif de géolocalisation 14, comme par exemple un dispositif de type GPS (« Global Positioning System ») peut être prévu, afin de fournir un paramètre physique, en particulier la position du véhicule. Cette position peut permettre au moyen d'obtention de paramètres physiques 11 de déterminer la vitesse, l'accélération, etc. L'antenne du dispositif de géolocalisation peut être interne ou placée extérieurement pour faciliter la réception des signaux tels que les signaux du réseau de satellites GPS ou autre réseau.

Un moyen d'affichage 20, avantageusement prévu dans la zone de vision du conducteur du véhicule peut aussi être prévu, afin de permettre l'affichage de certains résultats pertinents pour le conducteur. Sur la base de ces résultats, le conducteur pourra décider ou non de modifier ou adapter son mode de conduite, par exemple pour tenter d'obtenir des résultats plus favorables.

Le dispositif peut par ailleurs disposer de moyens pour identifier le conducteur, comme par exemple une carte RFID ou tout autre moyen similaire.

Une interface externe 30, de type filaire ou hertzienne, peut aussi être prévue. Une telle interface permet de transmettre certaines données et/ou résultats à un dispositif externe tel qu'un ordinateur assurant la gestion des données du véhicule ou d'une flotte de véhicules. Les données ou résultats peuvent être transmis en temps réel, par exemple par téléphonie cellulaire ou tout autre moyen de communication à distance, ou encore lorsque le véhicule est de retour à son site de gestion. Par site de gestion, on entend le lieu habituel où le véhicule est stationné lorsque non utilisé, et/ou d'où la gestion et/ou le contrôle et/ou l'entretien sont assurés. Les données transmises peuvent être de tout type, tel que les heures de début et fin de roulage, l'identifiant du véhicule et/ou du conducteur, en plus de données de base et des résultats issus du procédé. Un centre de gestion peut en outre effectuer un suivi d'un ou plusieurs conducteur et/ou véhicules dans le temps, effectuer des comparaisons entre les véhicules et/ou les conducteurs, etc.

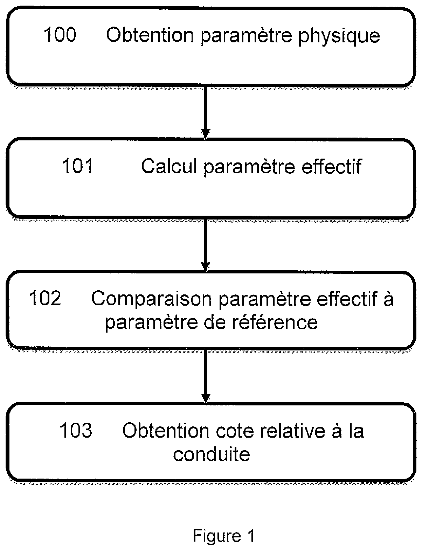

La figure 1 illustre les principales étapes du précédé d'évaluation de la conduite d'un véhicule selon l'invention. A l'étape 100, un ou plusieurs paramètres physiques sont obtenus par le moyen d'obtention de paramètres physique 11. Le calcul d'un ou plusieurs paramètres effectifs est effectué à l'étape 101 par le centre de calcul et de comparaison 12. Le même centre 12 effectue ensuite, à l'étape 102, une comparaison du ou des paramètres effectifs établis avec un ou plusieurs paramètres de référence. A l'étape 103, une cote en relation avec la conduite du véhicule est obtenue par le centre d'évaluation de conduite 13. La cote peut servir à présenter une ou plusieurs indications au conducteur afin qu'il soit informé si son mode de conduite est favorable ou non en regard des critères d'éco-conduite. Il peut alors adapter son style de conduite si besoin afin d'améliorer ses performances.

Les résultats, ainsi qu'éventuellement les données initiales telles que les paramètres physiques peuvent aussi être transmis à une centrale de gestion des données, traitant les données du véhicule en question de façon individuelle ou dans le cadre d'une gestion de flotte de véhicules.

Le tableau 1a, ci-dessous, présente un exemple de calcul effectué en se basant sur un mode énergétique. D'autres modes de calculs peuvent être utilisés, comme par exemple un mode basé sur l'accélération, illustré plus loin au tableau 2.

Tableau 1a : exemple théorique en se basant sur l'énergie

| Coordonnées GPS | | | V véhi cule | P eff | A véh | A réf | V réf | P réf | Cote instantanée | Cote cumulée |
|---|---|---|---|---|---|---|---|---|---|---|
| Long | Lat | Alt | | | | | | | | |
| L1 | I1 | A1 | | | Y1 | Yr1 | | | | |
| L2 | I2 | A2 | V1 | Pe1 | Y2 | Yr2 | Vr1 | Pr1 | Ci1=Pe1-Pr1 | Cc1=Ci1.dt1 |
| L3 | I3 | A3 | V2 | Pe2 | Y3 | Yr3 | Vr2 | Pr2 | Ci2=Pe2-Pr2 | Cc2=Cc1+Ci2 x dt2 |
| L4 | I4 | A4 | V3 | Pe3 | Y4 | Yr4 | Vr3 | Pr3 | Qi3=Pe3-Pr3 | Cc3=Cc2+Ci3 x dt3 |
| ... | ... | ... | ... | | ... | ... | ... | ... | | ... |

A partir du paramètre physique correspondant aux coordonnées de géolocalisation, soit la latitude, la longitude et éventuellement l'altitude, obtenus par un dispositif de géolocalisation 14, un paramètre physique, dans ce cas la vitesse du véhicule, est déterminée. Pour ce faire, à l'instant t1, les coordonnées de géolocalisation sont obtenues à partir du dispositif de géolocalisation 14. Les coordonnées métriques du tracé (X1, Y1, Z1) sont établies. A l'instant t2, les nouvelles coordonnées de géolocalisation sont obtenues. Les nouvelles coordonnées métriques du tracé (X2, Y2, Z2) sont établies. En utilisant la distance parcourue entre les premières coordonnées et ces nouvelles, la vitesse de déplacement V1 peut être déterminée.

Cette étape peut être effectuée de préférence par le centre de calcul et de comparaison 12, qui détermine ensuite un paramètre effectif Peff.

Dans cet exemple basé sur l'énergie, le paramètre effectif Peff est déterminé par la relation suivante :

$$Peff = \frac{1}{2} m(v_{i+1}^2 - v_i^2)$$

Dans cet exemple, le paramètre effectif n'est comptabilisé que s'il est positif, sinon on lui affecte une valeur nulle (non récupération d'énergie au freinage).

En cas de véhicule équipé d'un dispositif de récupération d'énergie au freinage, il est possible d'appliquer un coefficient pondérateur, comme par exemple de l'ordre de 0,15 sur les phases de freinage.

Dans une variante on utilise la valeur absolue du paramètre effectif pour prendre en compte l'énergie dissipée lors des phases de freinage.

On peut en outre intégrer dans le calcul de Peff :

- un coefficient proportionnel au cube, ou sous une forme polynomiale plus évoluée, de la vitesse du véhicule permettant de prendre en compte la composante aérodynamique;

- un coefficient proportionnel à la vitesse permettant de prendre en compte notamment les frottements de type visqueux (effet par exemple de l'huile de boite de vitesse);

- un coefficient proportionnel à la vitesse et à l'accélération pour prendre en compte les frottements de type transmission proportionnel au couple.

- un coefficient proportionnel à la pente locale pour prendre en compte l'effet de l'énergie potentielle.

D'autre critères peuvent également être appliqués et basés sur l'énergie non plus seulement inertielle, mais tenant également compte d'autres paramètres tels que la résistance au roulement des pneumatiques dont la loi est généralement assez constante jusqu'à une plage de vitesse dépendant du pneu puis croit rapidement, et de tout autre élément entrant dans la résistance à l'avancement du véhicule.

A partir des coordonnées du tracé (X1, Y1, Z1) et (X2, Y2, Z2) et de la vitesse V1, on évalue la vitesse du véhicule de référence Vr1. Dans cet exemple, pour calculer cette vitesse l'approche suivante est suivie: en phase d'accélération, et pour la même abscisse spatiale, le simulateur a un incrément de vitesse qui est défini par deux critères :

- l'accélération ne peut être supérieure à une accélération maximale qui est fonction de la plage de vitesse dans laquelle on se trouve. Cette accélération maximale est prise dans un tableau d'accélérations maximales par plage de vitesse et qui permet de définir la conduite souhaitée. Le tableau 1c présente un exemple succinct d'un tel tableau.

- si cette dernière accélération mène à une vitesse du simulateur supérieure à celle du véhicule réel, alors l'accélération retenue est celle séparant la vitesse du simulateur de celle du véhicule.

Cette approche est également appliquée en phase de freinage où la première fonction devient alors inopérante, l'accélération étant négative et la deuxième fonction gère alors seule les évolutions décroissantes de vitesse.

D'autres modes de réalisation sont également possibles, notamment en détectant les points bas de vitesse (points entourés de points de vitesse supérieure). A partir de ces points bas, l'accélération possible en chaque point est déterminée suivant un principe similaire au précédent: dans les phases d'accélération suivant le sens chronologique et en remontant le temps pour les phases de freinage. Ainsi, une courbe d'accélération est suivie, permettant de déduire la vitesse jusqu'à ce que cette dernière croise la courbe de freinage remontante suivante.

Il est par ailleurs possible d'écrêter les vitesses hautes en prévision des phases de freinage, ce qui correspond à anticiper sur les phases de freinage.

Il est aussi possible, pour optimiser la finesse du simulateur, de tenir compte de l'accélération transversale afin de pondérer celle-ci en situation de virage. Enfin, il est possible de tenir compte de la pente locale du trajet.

A partir des caractéristiques de positionnement et de la vitesse Vr1, on déduit le paramètre de référence (ou critère d'éco-conduite simulateur) Pr1, comme précédemment pour le véhicule.

Par comparaison (dans cet exemple par soustraction, mais selon d'autres exemples, on peut également utiliser le rapport) des paramètres Peff et Pr, on détermine la cote Ci1 (ou cote d'éco-conduite) instantanée. Par sommation ou intégration sur l'ensemble du parcours, on détermine la cote Ci (ou critère d'éco-conduite) cumulée ou globale.

Une démarche similaire est appliquée pour les autres points du parcours.

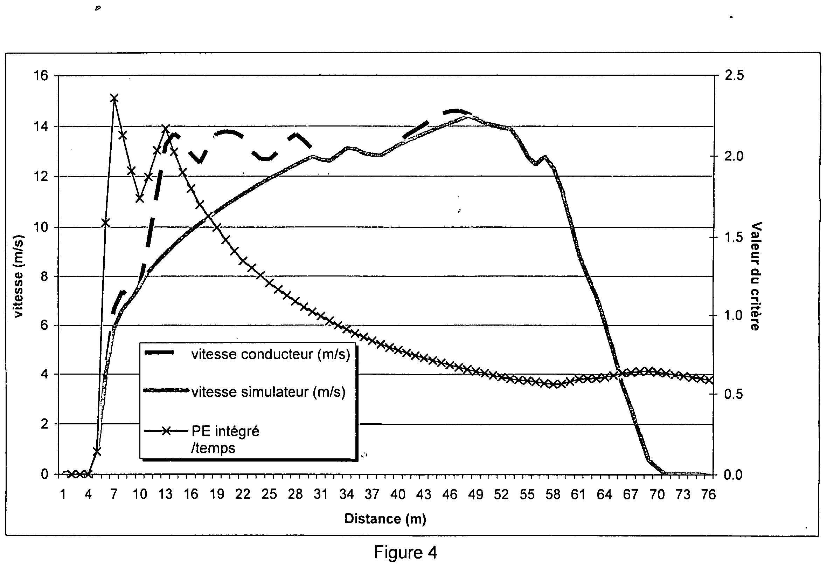

Le tableau suivant (tableau 1b) illustre un exemple d'application sur un trajet test, volontairement très court. La figure 4 illustre graphiquement les données et résultats obtenus pour ce trajet test.

Tableau 1b : exemple numérique (basée sur l'énergie)

| lat(°) | long(°) | alt(m) | V véh (m/s ) | Pe | A vé h | A réf | V Réf (m/s ) | Préf | Cote inst | Cote intégrée | Cote intégrée /temps |
|---|---|---|---|---|---|---|---|---|---|---|---|
| 4546.0 | 306.4 | 388.7 | 0.0 | 0.0 | | 0.0 | 0.0 | 0.0 | 0.0 | 0.0 | |
| 4546.0 | 306.4 | 388.7 | 0.0 | 0.0 | 0.0 | 0.0 | 0.0 | 51.4 | -51.4 | -51.4 | -25.7 |
| 4546.0 | 306.4 | 388.8 | 0.0 | 0.0 | 0.0 | 0.0 | 0.0 | 0.0 | 0.0 | -51.4 | -17,1 |
| 4546.0 | 306.4 | 388.8 | 0.0 | 40.0 | 0.0 | 0.0 | 0.0 | 40.0 | 0.0 | -51.4 | -12.9 |
| 4546.0 | 306.4 | 388.8 | 0.9 | 44140.3 | 0.9 | 0.0 | 0.9 | 44140.3 | 0.0 | -51.4 | -10.3 |
| 4546.0 | 306.4 | 388.9 | 4.0 | 804591.8 | 3.1 | 0.1 | 4.0 | 804591.8 | 0.0 | -51.4 | -8.6 |
| 4546.0 | 306.4 | 389.0 | 6.6 | 1534778.2 | 2.7 | 0.0 | 5.9 | 1011005.0 | 523773.2 | 523721.8 | 74817.4 |
| 4546.0 | 306.4 | 389.1 | 7.4 | 560938.8 | 0.7 | 0.0 | 6.6 | 518683.8 | 42255.0 | 565976.8 | 70747.1 |
| 4546.0 | 306.4 | 389.3 | 7.1 | 0.0 | -0.3 | 0.0 | 7.1 | 309411.0 | -309411.0 | 256565.8 | 28507.3 |
| 4546.0 | 306.4 | 389.4 | 7.6 | 389312.4 | 0.5 | 0.0 | 7.6 | 389312.4 | 0.0 | 256565.8 | 25656.6 |
| 4546.0 | 306.4 | 389.5 | 9.3 | 1631890.6 | 1.8 | 0.0 | 8.2 | 530393.2 | 1101497.4 | 1358063.2 | 123460.3 |
| 4546.0 | 306.4 | 389.6 | 11.3 | 2214654.1 | 2.0 | 0.0 | 8.6 | 358008.8 | 1856645.3 | 3214708.5 | 267892.4 |
| 4546.0 | 306.4 | 389.8 | 13.3 | 2588500.5 | 1.9 | 0.0 | 8.9 | 340398.0 | 2248102.5 | 5462811.0 | 420216.2 |
| 4546.0 | 306.4 | 389.9 | 13.7 | 629239.9 | 0.4 | 0.0 | 9.3 | 325885.2 | 303354.7 | 5766165.7 | 411869.0 |
| 4546.0 | 306.4 | 389.9 | 13.4 | 0.0 | -0.3 | 0.0 | 9.6 | 313618.1 | -313618.1 | 5452547.6 | 363503.2 |
| 4546.0 | 306.4 | 390.0 | 12.9 | 0.0 | -0.6 | 0.0 | 9.9 | 303046.1 | -303046.1 | 5149501.5 | 321843.8 |
| 4546.0 | 306.4 | 390.1 | 12.5 | 0.0 | -0.4 | 0.0 | 10.1 | 293794.0 | -293794.0 | 4855707.5 | 285629.9 |
| 4546.0 | 306.4 | 390.1 | 13.2 | 943191.5 | 0.7 | 0.0 | 10.4 | 285595.8 | 657595.7 | 5513303.2 | 306294.6 |
| 4546.0 | 306.3 | 390.3 | 13.7 | 740049.1 | 0.5 | 0.0 | 10.6 | 278256.2 | 461792.9 | 5975096.1 | 314478.7 |
| 4546.0 | 306.3 | 390.4 | 13.8 | 114570.4 | 0.1 | 0.0 | 10.9 | 271628.2 | -157057.8 | 5818038.4 | 290901.9 |
| 4546.0 | 306.3 | 390.4 | 13.8 | 0.0 | 0.0 | 0.0 | 11.1 | 265598.3 | -265598.3 | 5552440.1 | 264401.9 |
| 4546.0 | 306.3 | 390.6 | 13.6 | 0.0 | -0.2 | 0.0 | 11.3 | 260077.4 | -260077.4 | 5292362.7 | 240561.9 |
| 4546.0 | 306.3 | 390.8 | 13.0 | 0.0 | -0.6 | 0.0 | 11.5 | 254994.3 | -254994.3 | 5037368.4 | 219016.0 |
| 4546.0 | 306.3 | 391.0 | 12.7 | 0.0 | -0.3 | 0.0 | 11.7 | 250291.3 | -250291.3 | 4787077.1 | 199461.5 |
| 4545.9 | 306.3 | 391.4 | 12.7 | 0.0 | 0.0 | 0.0 | 11.9 | 245921.0 | -245921.0 | 4541156.1 | 181646.2 |
| 4545.9 | 306.3 | 391.8 | 13.0 | 477688.8 | 0.3 | 0.0 | 12.1 | 241844.0 | 235844.7 | 4777000.9 | 183730.8 |
| 4545.9 | 306.3 | 392.3 | 13.4 | 617005.3 | 0.4 | 0.0 | 12.3 | 238027.4 | 378977.9 | 5155978.7 | 190962.2 |
| 4545.9 | 306.3 | 392.7 | 13.7 | 338827.7 | 0.2 | 0.0 | 12.5 | 234443.2 | 104384.5 | 5260363.2 | 187870.1 |
| 4545.9 | 306.3 | 393.3 | 13.4 | 0.0 | -0.3 | 0.0 | 12.6 | 231067.7 | -231067.7 | 5029295.6 | 173424.0 |
| 4545.9 | 306.2 | 393.5 | 13.1 | 0.0 | -0.3 | 0.0 | 12.8 | 227880.3 | -227880.3 | 4801415.3 | 160047.2 |
| 4545.9 | 306.2 | 393.8 | 12.6 | 0.0 | -0.4 | 0.0 | 12.6 | 0.0 | 0,0 | 4801415.3 | 154884.4 |
| 4545.9 | 306.2 | 394.1 | 12.6 | 0.0 | 0.0 | 0.0 | 12.6 | 0.0 | 0.0 | 4801415.3 | 150044.2 |
| 4545.9 | 306.2 | 394.4 | 12.9 | 339551.7 | 0.2 | 0.0 | 12.9 | 339551.7 | 0.0 | 4801415.3 | 145497.4 |

EP 2 562 518 B1

| lat(°) | long(°) | alt(m) | V véh (m/s ) | Pe | A vé h | A réf | V Réf (m/s ) | Préf | Cote inst | Cote intégrée | Cote intégrée /temps |
|---|---|---|---|---|---|---|---|---|---|---|---|
| 4545.9 | 306.2 | 394.8 | 13.1 | 367983.3 | 0.3 | 0.0 | 13.1 | 367983.3 | 0.0 | 4801415.3 | 141218.1 |
| 4545.9 | 306.2 | 395.0 | 13.1 | 0.0 | 0.0 | 0.0 | 13.1 | 0.0 | 0.0 | 4801415.3 | 137183.3 |
| 4545.9 | 306.2 | 395.1 | 12.9 | 0.0 | -0.2 | 0.0 | 12.9 | 0.0 | 0.0 | 4801415.3 | 133372.6 |
| 4545.9 | 306.2 | 395.1 | 12.9 | 0.0 | -0.1 | 0.0 | 12.9 | 0.0 | 0.0 | 4801415.3 | 129768.0 |
| 4545.9 | 306.2 | 395.0 | 12.8 | 0.0 | 0.0 | 0.0 | 12.8 | 0.0 | 0.0 | 4801415.3 | 126353.0 |
| 4545.9 | 306.2 | 394.9 | 13.0 | 280285.2 | 0.2 | 0.0 | 13.0 | 280285.2 | 0.0 | 4801415.3 | 123113.2 |
| 4545.9 | 306.2 | 394.9 | 13.4 | 447105.2 | 0.3 | 0.0 | 13.3 | 316809.8 | 130295.4 | 4931710.7 | 123292.8 |
| 4545.9 | 306.2 | 394.9 | 13.7 | 434972.1 | 0.3 | 0.0 | 13.4 | 216619.1 | 218353.0 | 5150063.7 | 125611.3 |
| 4545.9 | 306.1 | 394.9 | 13.9 | 297883,1 | 0.2 | 0.0 | 13.6 | 214150.8 | 83732.3 | 5233796.1 | 124614.2 |
| 4545.9 | 306.1 | 394.8 | 14.1 | 310033.4 | 0.2 | 0.0 | 13.7 | 211792.1 | 98241.3 | 5332037.4 | 124000.9 |
| 4545.9 | 306.1 | 394.7 | 14.3 | 409874.7 | 0.3 | 0.0 | 13.9 | 209534.8 | 200339.9 | 5532377.3 | 125735.8 |
| 4545.9 | 306.1 | 394.6 | 14.5 | 256068.9 | 0.2 | 0.0 | 14.0 | 207371.4 | 48697.5 | 5581074.8 | 124023.9 |
| 4545.9 | 306.1 | 394.7 | 14.6 | 137226.1 | 0.1 | 0.0 | 14.1 | 205295.3 | -68069.2 | 5513005.5 | 119847.9 |
| 4545.9 | 306.1 | 394.7 | 14.6 | 32408.4 | 0.0 | 0.0 | 14.3 | 203300.5 | -170892.0 | 5342113.5 | 113662.0 |
| 4545.9 | 306.1 | 394.9 | 14.5 | 0.0 | -0.1 | 0.0 | 14.4 | 201381.5 | -201381.5 | 5140732.0 | 107098.6 |
| 4545.9 | 306.1 | 395.0 | 14.3 | 0.0 | -0.2 | 0.0 | 14.3 | 0.0 | 0.0 | 5140732.0 | 104912.9 |
| 4545.8 | 306.1 | 395.1 | 14.1 | 0.0 | -0.2 | 0.0 | 14.1 | 0.0 | 0.0 | 5140732.0 | 102814.6 |
| 4545.8 | 306.1 | 395.3 | 14.0 | 0.0 | -0.1 | 0.0 | 14.0 | 0.0 | 0.0 | 5140732.0 | 100798.7 |
| 4545.8 | 306.1 | 395.5 | 13.9 | 0.0 | -0.1 | 0.0 | 13.9 | 0.0 | 0.0 | 5140732.0 | 98860.2 |
| 4545.8 | 306.0 | 395.6 | 13.9 | 0.0 | -0.1 | 0.0 | 13.9 | 0.0 | 0.0 | 5140732.0 | 96994.9 |
| 4545.8 | 306.0 | 395.9 | 13.4 | 0.0 | -0.5 | 0.0 | 13.4 | 0.0 | 0.0 | 5140732.0 | 95198.7 |
| 4545.8 | 306.0 | 396.0 | 12.8 | 0.0 | -0.6 | 0.0 | 12.8 | 0.0 | 0.0 | 5140732.0 | 93467.9 |
| 4545.8 | 306.0 | 396.2 | 12.5 | 0.0 | -0.3 | 0.0 | 12.5 | 0.0 | 0.0 | 5140732.0 | 91798.8 |
| 4545.8 | 306.0 | 396.4 | 12.8 | 441613.4 | 0.3 | 0.0 | 12.8 | 441613.4 | 0.0 | 5140732.0 | 90188.3 |
| 4545.8 | 306.0 | 396.7 | 12.3 | 0.0 | -0.5 | 0.0 | 12.3 | 0.0 | 0.0 | 5140732.0 | 88633.3 |
| 4545.8 | 306.0 | 396.9 | 11.4 | 0.0 | -0.9 | 0.0 | 11.4 | 0.0 | 0.0 | 5140732.0 | 87131.1 |
| 4545.8 | 306.0 | 397.0 | 10.2 | 0.0 | -1.2 | 0.0 | 10.2 | 0.0 | 0.0 | 5140732.0 | 85678.9 |
| 4545.8 | 306.0 | 397.2 | 8.9 | 0.0 | -1.3 | 0.0 | 8.9 | 0.0 | 0.0 | 5140732.0 | 84274.3 |
| 4545.8 | 306.0 | 397.3 | 8.0 | 0.0 | -0.9 | 0.0 | 8.0 | 0.0 | 0.0 | 5140732.0 | 82915.0 |
| 4545.8 | 306.0 | 397.4 | 7.2 | 0.0 | -0.8 | 0.0 | 7.2 | 0.0 | 0.0 | 5140732.0 | 81598.9 |
| 4545.8 | 306.0 | 397.8 | 6.1 | 0.0 | -1.1 | 0.0 | 6.1 | 0.0 | 0.0 | 5140732.0 | 80323.9 |
| 4545.8 | 306.0 | 397.7 | 4.9 | 0.0 | -1.2 | 0.0 | 4.9 | 0.0 | 0.0 | 5140732.0 | 79088.2 |
| 4545.8 | 306.0 | 397.7 | 3.6 | 0.0 | -1.3 | 0.0 | 3.6 | 0.0 | 0.0 | 5140732.0 | 77889.9 |

EP 2 562 518 B1

(suite)

| lat(°) | long(°) | alt(m) | V véh (m/s) | Pe | A vé h | A réf | V Réf (m/s) | Préf | Cote inst | Cote intégrée | Cote intégrée /temps |
|---|---|---|---|---|---|---|---|---|---|---|---|
| 4545.8 | 306.0 | 397.7 | 2.6 | 0.0 | -0.9 | 0.0 | 2.6 | 0.0 | 0.0 | 5140732.0 | 76727.3 |
| 4545.8 | 306.0 | 397.6 | 1.6 | 0.0 | -1.1 | 0.0 | 1.6 | 0.0 | 0.0 | 5140732.0 | 75599.0 |
| 4545.8 | 306.0 | 397.6 | 0.6 | 0.0 | -1.0 | 0.0 | 0.6 | 0.0 | 0.0 | 5140732.0 | 74503.4 |
| 4545.8 | 306.0 | 397.5 | 0.3 | 0.0 | -0.3 | 0.0 | 0.3 | 0.0 | 0.0 | 5140732.0 | 73439.0 |
| 4545.8 | 306.0 | 397.4 | 0.0 | 0.0 | -0.3 | 0.0 | 0.0 | 0.0 | 0.0 | 5140732.0 | 72404.7 |
| 4545.8 | 306.0 | 397.3 | 0.0 | 22.8 | 0.0 | 0.0 | 0.0 | 22.8 | 0.0 | 5140732.0 | 71399.1 |
| 4545.8 | 306.0 | 397.2 | 0.0 | 0.0 | 0.0 | 0.0 | 0.0 | 0.0 | 0.0 | 5140732.0 | 70421.0 |
| 4545.8 | 306.0 | 397.1 | 0.0 | 0.0 | 0.0 | 0.0 | 0.0 | 0.0 | 0.0 | 5140732.0 | 69469.4 |
| 4545.8 | 306.0 | 397.0 | 0.0 | 12.9 | 0.0 | 0.0 | 0.0 | 12.9 | 0.0 | 5140732.0 | 68543.1 |
| 4545.8 | 306.0 | 397.0 | 0.0 | 0.0 | 0.0 | 0.0 | 0.0 | 0.0 | 0.0 | 5140732.0 | 67641.2 |

Tableau 1c : accélérations maximales par plages de vitesse

| | | Accélération maximale (G) |
|---|---|---|
| Plage de vitesse (borne haute en km/h) | 2.5 | 1.30 |
| | 7.5 | 1.20 |
| | 12.5 | 1.10 |
| | 17.5 | 1.03 |
| | 22.5 | 0.95 |
| | 27.5 | 0.88 |
| | 32.5 | 0.80 |
| | 37.5 | 0.75 |
| | 42.5 | 0.70 |
| | 47.5 | 0.65 |
| | 52.5 | 0.60 |
| | 57.5 | 0.55 |
| | 62.5 | 0.50 |
| | 67.5 | 0.48 |
| | 72.5 | 0.45 |
| | 77.5 | 0.42 |
| | 82.5 | 0.40 |
| | 87.5 | 0.37 |
| | 92.5 | 0.35 |

Selon un autre exemple de mise en œuvre tel que présenté au tableau 2a ci-après, on utilise pour paramètre effectif l'accélération instantanée directement mesurée à partir d'accéléromètres. Selon diverses variantes, l'accélération est calculée à partir de la vitesse mesurée ou fournie par le véhicule par exemple via le bus véhicule, ou encore à partir des informations de positionnement fournies par exemple par un dispositif de géo-localisation. On utilise également pour paramètre référence une accélération de référence fixe, ou de préférence dépendant d'une table à entrée multiple. Ces entrées peuvent éventuellement comprendre la vitesse référence précédente, la pente locale, le rayon de courbure de la route ou de la trajectoire suivie, la distance et/ou le temps par rapport au prochain point bas de vitesse réel (calcul différé), la masse du véhicule. Un exemple d'application dans lequel le paramètre effectif est l'accélération du véhicule et le paramètre référence l'accélérateur du simulateur est fourni ci-dessous au tableau 2b. La figure 4 illustre graphiquement ces résultats. Dans cet exemple de réalisation, le paramètre de référence est basé sur un tableau d'accélération dépendant de la vitesse précédente, du paramètre de référence et de la pente.

On utilise pour la cote d'énergie la différence des paramètres effectif et de référence. Pour accroître l'écart entre le paramètre effectif représentatif de la conduite réelle et le paramètre de référence représentatif de la conduite idéale ainsi que pour tenir compte de l'énergie dissipée lors des phases de freinage, la cote instantanée $C_i$ comporte en plus une mise au carré.

Tableau 2a : exemple théorique en se basant sur l'accélération instantanée

| Coordonnées GPS | | | V véhicule | A veh | P eff | V réf | A réf | P réf | Cote instantanée | Cote cumulée |
|---|---|---|---|---|---|---|---|---|---|---|
| Long | Lat | Alt | | | | | | | | |
| L1 | l1 | A1 | | | | | | | | |
| L2 | l2 | A2 | V1 | | | Vr1 | | | | |
| L3 | l3 | A3 | V2 | Y1 | Pe1 =Y1 | Vr2 | Yr1 | Pr1 =Yr1 | $Ci1=(Pe1-Pr1)^2$ | Cc1=Ci1,dt1 |

(suite)

| Coordonnées GPS | | | V véhicule | A veh | P eff | V réf | A réf | P réf | Cote instantanée | Cote cumulée |
|---|---|---|---|---|---|---|---|---|---|---|
| Long | Lat | Alt | | | | | | | | |
| L4 | I4 | A4 | V3 | Y2 | Pe2 =Y2 | Vr3 | Yr2 | Pr2 =Yr2 | $Ci2=(Pe2-Pr2)^2$ | Cc2=Cc1+Ci2x dt2 |
| ... | ... | ... | ... | ... | ... | ... | ... | ... | | ... |

Tableau 2b : exemple numérique (basé sur l'accélération)

| lat(°) | long(°) | alt(m) | V véh(m/s)' | A veh | Pe | V Réf (m/s) | A réf | Préf | Cote inst | Cote intégrée | Cote intégrée/temps |
|---|---|---|---|---|---|---|---|---|---|---|---|
| 4546.0 | 306.4 | 388.7 | 0.0 | | 0.0000 | 0.0 | 0.0000 | 0.0000 | 0.000 | 0.0 | |
| 4546.0 | 306.4 | 388.7 | 0.0 | 0.0000 | 0.0000 | 0.0 | 0.0000 | 0.0000 | 0.000 | 0.0 | 0.0 |
| 4546.0 | 306.4 | 388.8 | 0.0 | 0.0000 | 0.0000 | 0.0 | 0.0000 | 0.0000 | 0.000 | 0.0 | 0.0 |
| 4546.0 | 306.4 | 388.8 | 0.0 | 0.0103 | 0.0103 | 0.0 | 0.0003 | 0.0003 | 0.000 | 0.0 | 0.0 |
| 4546.0 | 306.4 | 388.8 | 0.9 | 0.8643 | 0.8643 | 0.9 | 0.0245 | 0.0245 | 0.705 | 0.7 | 0.1 |
| 4546.0 | 306.4 | 388.9 | 4.0 | 3.0609 | 3.0609 | 4.0 | 0.0867 | 0.0867 | 8.846 | 9.6 | 1.6 |
| 4546.0 | 306.4 | 389.0 | 6.6 | 2.6803 | 2.6803 | 5.9 | 0.0348 | 0.0348 | 6.998 | 16.6 | 2.4 |
| 4546.0 | 306.4 | 389.1 | 7.4 | 0.7408 | 0.7408 | 6.6 | 0.0218 | 0.0218 | 0.517 | 17.1 | 2.1 |
| 4546.0 | 306.4 | 389.3 | 7.1 | -0.3292 | -0.3292 | 7.1 | 0.0170 | 0.0170 | 0.120 | 17.2 | 1.9 |
| 4546.0 | 306.4 | 389.4 | 7.6 | 0.4939 | 0.4939 | 7.6 | 0.0140 | 0.0140 | 0.230 | 17.4 | 1.7 |
| 4546.0 | 306.4 | 389.5 | 9.3 | 1.7903 | 1.7903 | 8.2 | 0.0125 | 0.0125 | 3.160 | 20.6 | 1.9 |
| 4546.0 | 306.4 | 389.6 | 11.3 | 1.9858 | 1.9858 | 8.6 | 0.0112 | 0.0112 | 3.899 | 24.5 | 2.0 |
| 4546.0 | 306.4 | 389.8 | 13.3 | 1.9497 | 1.9497 | 8.9 | 0.0102 | 0.0102 | 3.762 | 28.2 | 2.2 |
| 4546.0 | 306.4 | 389.9 | 13.7 | 0.4321 | 0.4321 | 9.3 | 0.0094 | 0.0094 | 0.179 | 28.4 | 2.0 |
| 4546.0 | 306.4 | 389.9 | 13.4 | -0.2675 | -0.2675 | 9.6 | 0.0087 | 0.0087 | 0.076 | 28.5 | 1.9 |
| 4546.0 | 306.4 | 390.0 | 12.9 | -0.5556 | -0.5556 | 9.9 | 0.0082 | 0.0082 | 0.318 | 28.8 | 1.8 |
| 4546.0 | 306.4 | 390.1 | 12.5 | -0.3550 | -0.3550 | 10.1 | 0.0077 | 0.0077 | 0.132 | 28.9 | 1.7 |
| 4546.0 | 306.4 | 390.1 | 13.2 | 0.6791 | 0.6791 | 10.4 | 0.0073 | 0.0073 | 0.451 | 29.4 | 1.6 |
| 4546.0 | 306.3 | 390.3 | 13.7 | 0.5093 | 0.5093 | 10.6 | 0.0069 | 0.0069 | 0.252 | 29.6 | 1.6 |
| 4546.0 | 306.3 | 390.4 | 13.8 | 0.0772 | 0.0772 | 10.9 | 0.0066 | 0.0066 | 0.005 | 29.7 | 1.5 |
| 4546.0 | 306.3 | 390.4 | 13.8 | -0.0463 | -0.0463 | 11.1 | 0.0063 | 0.0063 | 0.003 | 29.7 | 1.4 |
| 4546.0 | 306.3 | 390.6 | 13.6 | -0.1903 | -0.1903 | 11.3 | 0.0061 | 0.0061 | 0.039 | 29.7 | 1.3 |
| 4546.0 | 306.3 | 390.8 | 13.0 | -0.5659 | -0.5659 | 11.5 | 0.0059 | 0.0059 | 0.327 | 30.0 | 1.3 |
| 4546.0 | 306.3 | 391.0 | 12.7 | -0.3138 | -0.3138 | 11.7 | 0.0057 | 0.0057 | 0.102 | 30.1 | 1.3 |
| 4545.9 | 306.3 | 391.4 | 12.7 | -0.0103 | -0.0103 | 11.9 | 0.0055 | 0.0055 | 0.000 | 30.1 | 1.2 |
| 4545.9 | 306.3 | 391.8 | 13.0 | 0.3447 | 0.3447 | 12.1 | 0.0053 | 0.0053 | 0.115 | 30.2 | 1.2 |
| 4545.9 | 306.3 | 392.3 | 13.4 | 0.4321 | 0.4321 | 12.3 | 0.0051 | 0.0051 | 0.182 | 30.4 | 1.1 |
| 4545.9 | 306.3 | 392.7 | 13.7 | 0.2315 | 0.2315 | 12.5 | 0.0050 | 0.0050 | 0.051 | 30.5 | 1.1 |
| 4545.9 | 306.3 | 393.3 | 13.4 | -0.2624 | -0.2624 | 12.6 | 0.0048 | 0.0048 | 0.071 | 30.5 | 1.1 |
| 4545.9 | 306.2 | 393.5 | 13.1 | -0.3498 | -0.3498 | 12.8 | 0.0047 | 0.0047 | 0.126 | 30.7 | 1.0 |
| 4545.9 | 306.2 | 393.8 | 12.6 | -0.4218 | -0.4218 | 12.6 | 0.0046 | 0.0046 | 0.182 | 30.8 | 1.0 |
| 4545.9 | 306.2 | 394.1 | 12.6 | -0.0257 | -0.0257 | 12.6 | -0.0007 | -0.0007 | 0.001 | 30.9 | 1.0 |
| 4545.9 | 306.2 | 394.4 | 12.9 | 0.2469 | 0.2469 | 12.9 | 0.0045 | 0.0045 | 0.059 | 30.9 | 0.9 |

(suite)

| lat(°) | long(°) | alt(m) | V véh(m/s)' | A veh | Pe | VRéf(m/s) | A réf | Préf | Cote inst | Cote intégrée | Cote intégrée/temps |
|---|---|---|---|---|---|---|---|---|---|---|---|
| 4545.9 | 306.2 | 394.8 | 13.1 | 0.2624 | 0.2624 | 13.1 | 0.0044 | 0.0044 | 0.067 | 31.0 | 0.9 |
| 4545.9 | 306.2 | 395.0 | 13.1 | -0.0257 | -0.0257 | 13.1 | -0.0007 | -0.0007 | 0.001 | 31.0 | 0,9 |
| 4545.9 | 306.2 | 395.1 | 12.9 | -0.1852 | -0.1852 | 12.9 | -0.0052 | -0.0052 | 0.032 | 31.0 | 0.9 |
| 4545.9 | 306.2 | 395.1 | 12.9 | -0.0669 | -0.0669 | 12.9 | -0.0019 | -0.0019 | 0.004 | 31.0 | 0.8 |
| 4545.9 | 306.2 | 395.0 | 12.8 | -0.0051 | -0.0051 | 12.8 | -00001 | -0.0001 | 0.000 | 31.0 | 0.8 |
| 4545.9 | 306.2 | 394.9 | 13.0 | 0.2006 | 0.2006 | 13.0 | 0.0045 | 0.0045 | 0.038 | 31.1 | 0.8 |
| 4545.9 | 306.2 | 394.9 | 13.4 | 0.3138 | 0.3138 | 13.3 | 0.0044 | 0.0044 | 0.096 | 31.1 | 0.8 |
| 4545.9 | 306.2 | 394.9 | 13.7 | 0.2984 | 0.2984 | 13.4 | 0.0043 | 0.0043 | 0.087 | 31.2 | 0.8 |
| 4545.9 | 306.1 | 394.9 | 13.9 | 0.2006 | 0.2006 | 13.6 | 0.0042 | 0.0042 | 0.039 | 31.3 | 0.7 |
| 4545.9 | 306.1 | 394.8 | 14.1 | 0.2058 | 0.2058 | 13.7 | 0.0041 | 0.0041 | 0.041 | 31.3 | 0.7 |
| 4545.9 | 306.1 | 394.7 | 14.3 | 0.2675 | 0.2675 | 13.9 | 0.0040 | 0.0040 | 0.069 | 31.4 | 0.7 |
| 4545.9 | 306.1 | 394.6 | 14.5 | 0.1646 | 0.1646 | 14.0 | 0.0039 | 0.0039 | 0.026 | 31.4 | 0.7 |
| 4545.9 | 306.1 | 394.7 | 14.6 | 0.0875 | 0.0875 | 14.1 | 0.0038 | 0.0038 | 0.007 | 31.4 | 0.7 |
| 4545.9 | 306.1 | 394.7 | 14.6 | 0.0206 | 0.0206 | 14.3 | 0.0038 | 0.0038 | 0.000 | 31.4 | 0.7 |
| 4545.9 | 306.1 | 394.9 | 14.5 | -0.1286 | -0.1286 | 14.4 | 0.0037 | 0.0037 | 0.018 | 31.4 | 0.7 |
| 4545.9 | 306.1 | 395.0 | 14.3 | -0.2006 | -0.2006 | 14.3 | 0.0036 | 0.0036 | 0.042 | 31.5 | 0.6 |
| 4545.8 | 306.1 | 395.1 | 14.1 | -0.1749 | -0.1749 | 14.1 | -0.0050 | -0.0050 | 0.029 | 31.5 | 0.6 |
| 4545.8 | 306.1 | 395.3 | 14.0 | -0.0875 | -0.0875 | 14.0 | -0.0025 | -0.0025 | 0.007 | 31.5 | 0.6 |
| 4545.8 | 306.1 | 395.5 | 13.9 | -0.0772 | -0.0772 | 13.9 | -0.0022 | -0.0022 | 0.006 | 31.5 | 0.6 |
| 4545.8 | 306.0 | 395.6 | 13.9 | -0.0566 | -0.0566 | 13.9 | -0.0016 | -0.0016 | 0.003 | 31.5 | 0.6 |
| 4545.8 | 306.0 | 395.9 | 13.4 | -0.4579 | -0.4579 | 13.4 | -0.0130 | -0.0130 | 0.198 | 31.7 | 0.6 |
| 4545.8 | 306.0 | 396.0 | 12.8 | -0.6431 | -0.6431 | 12.8 | -0.0182 | -0.0182 | 0.390 | 32.1 | 0.6 |
| 4545.8 | 306.0 | 396.2 | 12.5 | -0.3138 | -0.3138 | 12.5 | -0.0089 | -0.0089 | 0.093 | 32.2 | 0.6 |
| 4545.8 | 306.0 | 396.4 | 12.8 | 0.3241 | 0.3241 | 12.8 | 0.0046 | 0.0046 | 0.102 | 32.3 | 0.6 |
| 4545.8 | 306.0 | 396.7 | 12.3 | -0.4784 | -0.4784 | 12.3 | -0.0135 | -0.0135 | 0.216 | 32.5 | 0.6 |
| 4545.8 | 306.0 | 396.9 | 11.4 | -0.8797 | -0.8797 | 11.4 | -0.0249 | -0.0249 | 0.731 | 33.2 | 0.6 |
| 4545.8 | 306.0 | 397.0 | 10.2 | -1.2244 | -1.2244 | 10.2 | -0.0347 | -0.0347 | 1.415 | 34.7 | 0.6 |
| 4545.8 | 306.0 | 397.2 | 8.9 | -1.2707 | -1.2707 | 8.9 | -0.0360 | -0.0360 | 1.524 | 36.2 | 0.6 |
| 4545.8 | 306.0 | 397.3 | 8.0 | -0.9414 | -0.9414 | 8.0 | -0.0267 | -0.0267 | 0.837 | 37.0 | 0.6 |
| 4545.8 | 306.0 | 397.4 | 7.2 | -0.8077 | -0.8077 | 7.2 | -0.0229 | -0.0229 | 0.616 | 37.6 | 0.6 |
| 4545.8 | 306.0 | 397.8 | 6.1 | -1.1112 | -1.1112 | 6.1 | -0.0315 | -0.0315 | 1.166 | 38.8 | 0.6 |
| 4545.8 | 306.0 | 397.7 | 4.9 | -1.1678 | -1.1678 | 4.9 | -0.0331 | -0.0331 | 1.288 | 40.1 | 0.6 |
| 4545.8 | 306.0 | 397.7 | 3.6 | -1.3324 | -1.3324 | 3.6 | -0.0377 | -0.0377 | 1.676 | 41.8 | 0.6 |

(suite)

| lat(°) | long(°) | alt(m) | V véh(m/s) ' | A veh | Pe | V Réf (m/s) | A réf | Préf | Cote inst | Cote intégrée | Cote intégrée/temps |
|---|---|---|---|---|---|---|---|---|---|---|---|
| 4545.8 | 306.0 | 397.7 | 2.6 | -0.9363 | -0.9363 | 2.6 | -0.0265 | -0.0265 | 0.828 | 42.6 | 0.6 |
| 4545.8 | 306.0 | 397.6 | 1.6 | -1.0598 | -1.0598 | 1.6 | -0.0300 | -0.0300 | 1.060 | 43.7 | 0.6 |
| 4545.8 | 306.0 | 397.6 | 0.6 | -0.9980 | -0.9980 | 0.6 | -0.0283 | -0.0283 | 0.940 | 44.6 | 0.6 |
| 4545.8 | 306.0 | 397.5 | 0.3 | -0.3035 | -0.3035 | 0.3 | -0.0086 | -0.0086 | 0.087 | 44.7 | 0.6 |
| 4545.8 | 306.0 | 397.4 | 0.0 | -0.2624 | -0.2624 | 0.0 | -0.0074 | -0.0074 | 0.065 | 44.8 | 0.6 |
| 4545.8 | 306.0 | 397.3 | 0.0 | 0.0103 | 0.0103 | 0.0 | 0.0003 | 0.0003 | 0.000 | 44.8 | 0.6 |
| 4545.8 | 306.0 | 397.2 | 0.0 | 0.0000 | 0.0000 | 0.0 | 0.0000 | 0.0000 | 0.000 | 44.8 | 0.6 |
| 4545.8 | 306.0 | 397.1 | 0.0 | -0.0051 | -0.0051 | 0.0 | -0.0001 | -0.0001 | 0.000 | 44,8 | 0.6 |
| 4545.8 | 306.0 | 397.0 | 0.0 | 0.0051 | 0.0051 | 0.0 | 0.0001 | 0.0001 | 0.000 | 44.8 | 0.6 |
| 4545.8 | 306.0 | 397.0 | 0.0 | -0.0051 | -0.0051 | 0.0 | 0.0000 | 0.0000 | 0.000 | 44.8 | 0.6 |

Selon l'invention, un afficheur est mis à la disposition du conducteur, afin qu'il puisse visualiser en temps réel l'effet de son type de conduite. Par exemple, le tableau 3 de décision présenté ci-dessous permet en fonction du niveau d'accélération et de la plage de vitesse de déterminer un incrément de la cote. Dans cet exemple, un afficheur de type diagramme à barre permet d'afficher en temps réel [es variations de la cote, il peut avantageusement être complété par une valeur numérique indiquant le niveau de la cote d'énergie ou qualité de conduite au sens de l'éco-conduite ou de la conduite rationnelle.

Dans cet exemple de mise en oeuvre, la valeur est directement utilisée pour l'affichage instantané sous forme de diagramme à barre, de sorte que la valeur 1 corresponde à 1 carreau, la valeur 2 à 2 carreaux, jusqu'à la valeur 8 pour 8 carreaux. Des codes de couleur peuvent être ajoutés au diagramme afin d'identifier des zones favorables (avec de plus faibles valeurs de cote) et des zones défavorables. D'autres types d'affichage peuvent aussi être utilisés, comme par exemple un afficheur de type compteur à aiguille.

Ainsi, si par exemple un conducteur constate une valeur élevée, il peut immédiatement modifier son mode de conduite, par exemple en accélérant de façon plus progressive, en négociant les virages de façon plus modérée, etc. Il verra immédiatement l'effet produit sur l'afficheur. Ce type d'indication permet à un conducteur d'optimiser ses performances en termes d'éco-conduite. Ces indications pouvant également dans le cas de flottes de véhicule être retransmise sous forme instantanée ou moyennées par exemple par trajet ou par jour au gestionnaire de la flotte ou au formateur par des moyens connu de type radio (Bluetooth, GSM...) ou autre (transfert manuel par connexion directe ou mémoire).

Tableau 3 : tableau de décision pour diagramme visuel

| | | Incrément côte | | | | | | | |
|---|---|---|---|---|---|---|---|---|---|
| | Niveau d'accéléra tion constaté (m/s$^2$) | 1 | 2 | 3 | 4 | 5 | 6 | 7 | 8 |
| Plage de vitesse (borne haute en km/h) | 2.5 | 0.76 | 0.84 | 0.91 | 0.99 | 1.07 | 1.15 | 1.22 | 1.30 |
| | 7.5 | 0.68 | 0.75 | 0.83 | 0.90 | 0.98 | 1.05 | 1.12 | 1.20 |
| | 12.5 | 0.60 | 0.67 | 0.74 | 0.81 | 0.88 | 0.96 | 1.03 | 1.10 |
| | 17.5 | 0.54 | 0.61 | 0.68 | 0.75 | 0.82 | 0.89 | 0.96 | 1.03 |
| | 22.5 | 0.48 | 0.55 | 0.61 | 0.68 | 0.75 | 0.82 | 0.88 | 0.95 |
| | 27.5 | 0.44 | 0.50 | 0.57 | 0.63 | 0.69 | 0.76 | 0.82 | 0.88 |
| | 32.5 | 0.40 | 0.46 | 0.51 | 0.57 | 0.63 | 0.69 | 0.74 | 0.80 |
| | 37.5 | 0.36 | 0.42 | 0.47 | 0.53 | 0.58 | 0.64 | 0.70 | 0.75 |
| | 42.5 | 0.32 | 0.37 | 0.43 | 0.48 | 0.54 | 0.59 | 0.64 | 0.70 |
| | 47.5 | 0.28 | 0.33 | 0.39 | 0.44 | 0.49 | 0.55 | 0.60 | 0.65 |
| | 52.5 | 0.24 | 0.29 | 0.34 | 0.40 | 0.45 | 0.50 | 0.55 | 0.60 |
| | 57.5 | 0.22 | 0.26 | 0.31 | 0.35 | 0.40 | 0.45 | 0.50 | 0.55 |
| | 62.5 | 0.20 | 0.24 | 0.29 | 0.33 | 0.37 | 0.42 | 0.46 | 0.50 |
| | 67.5 | 0.18 | 0.23 | 0.27 | 0.32 | 0.36 | 0.40 | 0.44 | 0.48 |
| | 72.5 | 0.16 | 0.21 | 0.25 | 0.29 | 0.33 | 0.37 | 0.41 | 0.45 |
| | 77.5 | 0.14 | 0.18 | 0.22 | 0.26 | 0.30 | 0.34 | 0.38 | 0.42 |
| | 82.5 | 0.12 | 0.16 | 0.20 | 0.24 | 0.28 | 0.32 | 0.36 | 0.40 |
| | 87.5 | 0.10 | 0.14 | 0.18 | 0.22 | 0.26 | 0.30 | 0.34 | 0.37 |
| | 92.5 | 0.08 | 0.12 | 0.16 | 0.20 | 0.24 | 0.28 | 0.32 | 0.35 |

Les Figures et la description faite ci-dessus illustrent l'invention plutôt qu'elles ne la limitent. En particulier, l'invention et ses différentes variantes viennent d'être décrites en relation avec des trajets très courts, uniquement à des fins de démonstration. Le dispositif et le procédé sont toutefois efficaces sur des trajets beaucoup plus longs. En outre, sur de longs trajets, certaines indications fournies par le dispositif peuvent permettre à un conducteur d'adopter une conduite plus économique, permettant de réaliser des économies de carburant. Pour des flottes de véhicules, en particulier de camions ou de bus, les économies potentielles sont substantielles.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Dispositif (10) permettant de fournir une cote d'énergie de conduite d'un véhicule par rapport à un modèle d'éco-conduite de référence, le dispositif comprenant :

   - un moyen d'obtention (11) d'au moins un paramètre physique, le paramètre physique permettant de déterminer à chaque instant lorsque le véhicule effectue un trajet, la valeur de la vitesse et de l'accélération instantanée du véhicule ;
   - un centre de calcul et de comparaison (12), configuré pour, à partir du paramètre physique, calculer ou mesurer à chaque instant lorsque le véhicule effectue le trajet, un paramètre effectif qui est fonction de l'accélération instantanée ou de la vitesse du véhicule, et pour comparer à chaque instant ce paramètre effectif à un paramètre de référence équivalent du modèle d'éco-conduite de référence, issu d'une base de données (15) ;
   - un centre d'évaluation (13) de la conduite, configuré pour fournir la cote d'énergie de conduite en mesurant l'écart entre le paramètre effectif et le paramètre de référence ;
   le modèle d'éco-conduite comportant des niveaux d'accélération définis par plages de vitesse, ou des niveaux de décélération définis par plages de vitesse, ou des limites de vitesse en courbe basées sur l'accélération transversale ou éventuellement sur la vitesse de lacet induite.

2. Dispositif selon la revendication 1, **caractérisé en ce qu'**il comprend un dispositif de géolocalisation (14).

3. Dispositif selon la revendication 2, **caractérisé en ce qu'**il comprend un centre de calcul de la vitesse et de l'accélération, relié au dispositif de géolocalisation, et permettant de déterminer la vitesse et/ou l'accélération sur la base des données de position du véhicule fournies par le dispositif de géolocalisation.

4. Dispositif selon la revendication 1, **caractérisé en ce que** le paramètre effectif et le paramètre de référence sont fonctions d'au moins un paramètre choisi dans une liste comprenant la vitesse, l'accélération longitudinale, l'accélération transversale, l'énergie cinétique, le travail, la puissance, la pente de la route, le rayon de courbure de la route et la position.

5. Procédé permettant de fournir une cote d'énergie de conduite d'un véhicule par rapport à rapport à un modèle d'éco-conduite de référence, comprenant les étapes consistant à :

   - obtenir au moins un paramètre physique permettant de déterminer, lorsque le véhicule effectue un trajet, à chaque instant la valeur de la vitesse et de l'accélération instantanée du véhicule ;
   - à partir du paramètre physique, calculer ou mesurer à chaque instant lorsque le véhicule effectue le trajet, un paramètre effectif qui est fonction de l'accélération instantanée ou de la vitesse ;
   - comparer à chaque instant ce paramètre effectif avec un paramètre de référence équivalent du modèle d'éco-conduite de référence, issu d'une base de données, le modèle d'éco-conduite comportant des niveaux d'accélération définis par plages de vitesse, ou des niveaux de décélération définis par plages de vitesse, ou des limites de vitesse en courbe basées sur l'accélération transversale ou éventuellement sur la vitesse de lacet induite.
   - fournir la cote d'énergie de conduite en mesurant l'écart entre le paramètre effectif et le paramètre de référence.

6. Procédé selon revendication 5, dans lequel le paramètre effectif et le paramètre de référence sont fonctions d'au moins un paramètre choisi dans une liste comprenant la vitesse, l'accélération longitudinale, l'accélération transversale, l'énergie cinétique, le travail, la puissance, la pente de la route, le rayon de courbure de la route et la position.

7. Procédé selon l'une des revendications 5 ou 6, dans lequel le paramètre physique est la position du véhicule en fonction du temps.

8. Procédé selon la revendication 7, dans lequel la position est fournie par un système de géolocalisation.

9. Procédé selon l'une des revendications 5 ou 6, dans lequel le paramètre physique est la vitesse instantanée.

**10.** Procédé selon l'une des revendications 5 ou 6, dans lequel le paramètre physique est l'accélération instantanée.

**11.** Procédé selon l'une des revendications 5 à 10, dans lequel la cote d'énergie de conduite du véhicule est fonction de l'écart de niveau énergétique par rapport à un niveau énergétique de référence.

**12.** Procédé selon la revendication 11, dans lequel le niveau énergétique de référence est fonction d'une part de la consommation énergétique et d'autre part du temps ou de la longueur du parcours.

**Patentansprüche**

**1.** Vorrichtung (10) mit der es möglich wird, eine Fahrenergiebewertung eines Fahrzeugs, bezogen auf ein Modell einer ökologischen Fahrweise zu liefern, wobei die Vorrichtung umfasst:

- Mittel zum Erfassen (11) mindestens eines physischen Parameters, mit dem jederzeit, wenn das Fahrzeug eine Strecke zurücklegt, der momentane Geschwindigkeits- und Beschleunigungswert des Fahrzeugs bestimmt werden kann,
- ein Berechnungs- und Vergleichszentrum (12), konfiguriert um ausgehend vom physischen Parameter jederzeit, wenn das Fahrzeug eine Strecke zurücklegt, einen effektiven Parameter zu berechnen oder zu messen, der von der momentanen Beschleunigung oder Geschwindigkeit des Fahrzeugs abhängt und zu jedem Zeitpunkt diesen effektiven Parameter mit einem äquivalenten Referenzparameter des ökologischen Fahrmodells aus einer Datenbank (15) zu vergleichen;
- ein Zentrum zur Beurteilung (13) der Fahrweise, konfiguriert zur Lieferung der Fahrenergiebewertung durch Messung der Abweichung zwischen dem effektiven Parameter und dem Referenzparameter, wobei das ökologische Fahrmodell durch Geschwindigkeitsbereiche definierte Beschleunigungsstufen oder durch Geschwindigkeitsbereiche definierte Abbremsstufen enthält, oder durch Begrenzungen der Kurvengeschwindigkeit, auf Grundlage der Querbeschleunigung oder der induzierten Giergeschwindigkeit.

**2.** Vorrichtung gemäß Anspruch 1, **dadurch gekennzeichnet, dass** sie eine Vorrichtung zur Bestimmung des Standortes (14) enthält.

**3.** Vorrichtung gemäß Anspruch 2, **dadurch gekennzeichnet, dass** sie ein Zentrum zur Berechnung für Geschwindigkeit und Beschleunigung, verbunden mit der Standortbestimmungsvorrichtung, enthält, mit dem es möglich ist, die Geschwindigkeit und/ oder Beschleunigung in der Standortdatenbank des Fahrzeugs, geliefert von der Standortbestimmungsvorrichtung, zu bestimmen.

**4.** Vorrichtung gemäß Anspruch 1, **dadurch gekennzeichnet, dass** der effektive Parameter und der Referenzparameter Funktion mindestens eines Parameters sind, der aus einer Liste ausgewählt wird, die die Geschwindigkeit, die Beschleunigung die Längsbeschleunigung, die Querbeschleunigung, die kinetische Energie, die Arbeit, die Leistung, die Straßenneigung, den Krümmungsradius der Straße und die Position enthält.

**5.** Methode mit der es möglich wird, eine Fahrenergiebewertung eines Fahrzeugs bezogen auf ein Modell einer ökologischen Fahrweise zu liefern, die die folgenden Schritte umfasst:

- wenn das Fahrzeug eine Strecke zurücklegt, mindestens einen physischen Parameter zu erfassen, mit dem zu jeder Zeit der momentane Geschwindigkeits- und Beschleunigungswert des Fahrzeugs bestimmt werden kann;
- ausgehend vom physischen Parameter zu jeder Zeit wenn das Fahrzeug eine Strecke zurücklegt, einen effektiven Parameter zu berechnen oder zu messen, der von der momentanen Beschleunigung oder Geschwindigkeit des Fahrzeugs abhängt;
- zu jeder Zeit diesen effektiven Parameter mit einem äquivalenten Referenzparameter des ökologischen Fahrmodells, aus einer Datenbank zu vergleichen; wobei das ökologische Fahrmodell durch Geschwindigkeitsbereiche definierte Beschleunigungsstufen oder durch Geschwindigkeitsbereiche definierte Abbremsstufen enthält, oder durch Begrenzungen der Kurvengeschwindigkeit, auf Grundlage auf Grundlage der Querbeschleunigung oder der induzierten Giergeschwindigkeit.
- eine Fahrenergiebewertung durch Messung der Abweichung zwischen dem effektiven Parameter und dem Referenzparameter zu liefern.

6. Methode nach Anspruch 5, bei der der effektive Parameter und der Referenzparameter Funktion mindestens eines Parameters sind, der aus einer Liste ausgewählt wird, die die Geschwindigkeit, die Beschleunigung die Längsbeschleunigung, die Querbeschleunigung, die kinetische Energie, die Arbeit, die Leistung, die Straßenneigung, den Krümmungsradius der Straße und die Position enthält.

7. Methode nach einem der Ansprüche 5 oder 6, bei der der physische Parameter die Position des Fahrzeugs in Abhängigkeit von der Zeit ist.

8. Methode nach Anspruch 7, bei dem die Position von einem Standortbestimmungssystem geliefert wird.

9. Methode nach einem der Ansprüche 5 oder 6, bei der der physische Parameter die momentane Geschwindigkeit ist.

10. Methode nach einem der Ansprüche 5 oder 6, bei der der physische Parameter die momentane Beschleunigung ist.

11. Methode nach einem der Ansprüche 5 bis 10, bei der die Fahrenergiebewertung des Fahrzeugs von der Abweichung zwischen dem Energieniveau bezogen auf ein Referenzenergieniveau abhängt.

12. Methode nach Anspruch 11, bei der das Referenzenergieniveau einerseits vom Energieverbrauch abhängt und andererseits von der Zeit oder der Länge der Strecke.

**Claims**

1. Device (10) for providing a driving energy rating of a vehicle with respect to a reference eco-driving model, the device comprising :

    - means (11) for obtaining at least one physical parameter, the physical parameter making it possible to determine at each moment when the vehicle is making a journey the value of the instantaneous speed and acceleration of the vehicle;
    - a calculation and comparison center (12), configured to calculate or measure, from the physical parameter, at each instant when the vehicle makes the journey, an effective parameter which is a function of the instantaneous acceleration or speed of the vehicle, and to compare this effective parameter at each instant with an equivalent reference parameter of the reference eco-driving model, taken from a database (15);
    - a driving assessment center (13), configured to provide the driving energy rating by measuring the difference between the actual parameter and the reference parameter;

    the eco-driving model comprising acceleration levels defined by speed ranges, or deceleration levels defined by speed ranges, or curve speed limits based on transverse acceleration or possibly on induced yaw rate.

2. Device according to claim 1, **characterised in that** it comprises a geolocation device (14).

3. Device according to claim 2, **characterised in that** it comprises a speed and acceleration computing center, connected to the geolocation device, and making it possible to determine the speed and/or acceleration on the basis of the vehicle position data provided by the geolocation device.

4. Device according to claim 1, **characterized in that** the effective parameter and the reference parameter are functions of at least one parameter chosen from a list including the speed, longitudinal acceleration, transverse acceleration, kinetic energy, work, power, road slope, road radius of curvature and position.

5. Method of providing a driving energy rating of a vehicle with respect to a reference eco-driving model, comprising the steps of:

    - obtaining at least one physical parameter to determine, when the vehicle makes a journey, at each moment the value of the instantaneous speed and acceleration of the vehicle;
    - from the physical parameter, calculate or measure at each moment when the vehicle makes the journey, an effective parameter which is a function of the instantaneous acceleration or the speed ;
    - compare at each moment this effective parameter with an equivalent reference parameter of the reference eco-driving model, taken from a database, the eco- driving comprising acceleration levels defined by speed

**EP 2 562 518 B1**

ranges, or levels deceleration limits defined by speed ranges, or curved speed limits based on the transverse acceleration or possibly the induced yaw rate.
- provide the driving energy rating by measuring the deviation between the effective parameter and the reference parameter.

6. Method according to claim 5, wherein the effective parameter and the reference parameter are a function of at least one parameter selected from a list comprising speed, longitudinal acceleration, transverse acceleration, kinetic energy, work, power, road slope, road radius of curvature and position.

7. Method according to one of claims 5 or 6, wherein the physical parameter is the position of the vehicle as a function of time.

8. Method according to claim 7, wherein the position is provided by a system of geolocation.

9. Method according to one of claims 5 or 6, wherein the physical parameter is the instantaneous speed.

10. Method according to one of claims 5 or 6, wherein the physical parameter is instant acceleration.

11. Method according to one of claims 5 to 10, wherein the driving energy rating of the vehicle is a function of the deviation of the energy level from a reference energy level.

12. The procedure according to claim 11, wherein the reference energy level is a function of energy consumption on the one hand and of the time or length of the journey on the other hand.

```
┌─────────────────────────────────────────────┐
│  100    Obtention paramètre physique         │
└─────────────────────────────────────────────┘
                      │
                      ▼
┌─────────────────────────────────────────────┐
│  101    Calcul paramètre effectif            │
└─────────────────────────────────────────────┘
                      │
                      ▼
┌─────────────────────────────────────────────┐
│  102    Comparaison paramètre effectif à     │
│         paramètre de référence               │
└─────────────────────────────────────────────┘
                      │
                      ▼
┌─────────────────────────────────────────────┐
│  103    Obtention cote relative à la         │
│         conduite                             │
└─────────────────────────────────────────────┘
```

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2432437 A
- US 200528885 B
- US 4845630 A
- WO 8301686 A
- FR 2923290